# EUROPÄISCHE PATENTSCHRIFT

(11) **EP 2 676 870 B1**
(45) Veröffentlichungstag und Bekanntmachung des Hinweises auf die Patenterteilung: **06.05.2020**
(21) Anmeldenummer: 13001271.9
(22) Anmeldetag: 13.03.2013
(51) Int. Cl.: B62D 25/24

(54) **Selbstzentrierender Deckel**
Self-centering lid
Couvercle à centrage automatique

(30) Priorität: 22.06.2012 DE 102012012485
(43) Veröffentlichungstag der Anmeldung: 25.12.2013
(73) Patentinhaber: MAN Truck & Bus SE, 80995 München (DE)
(72) Erfinder: Rahlf, Gerhard, 85757 Karlsfeld (DE); Disman, Wladimir, 81757 München (DE)
(74) Vertreter: v. Bezold & Partner Patentanwälte - PartG mbB

(56) Entgegenhaltungen:
- DE-A1- 2 518 203
- FR-A1- 2 753 677
- US-A- 3 278 066
- US-A- 4 363 420
- US-A- 4 560 083
- US-A- 4 832 234

## Beschreibung

Die Erfindung betrifft einen Deckel für zumindest eine Öffnung, nämlich einer Öffnung eines Kraftfahrzeugelements, wie z.B. ein Außenhaut- oder Karosserieelement.

Zum Stand der Technik können zunächst die US 3 278 066 A und die US 4 363 420 A genannt werden, wobei die US 3 278 066 A einen Verschluss für elektrische Panelboards beschreibt und die US 4 363 420 A einen Dichtungsstöpsel zum Verschließen von Lackdrainagelöchern beschreibt.

Die Befestigung üblicher einteiliger Deckel für Kraftfahrzeugelemente erfolgt meist mittels Schnapp- und Rasthaken. Diese sind auf die jeweiligen Öffnungen und die Wanddicke der die Öffnungen aufweisenden Kraftfahrzeugelemente abzustimmen, insbesondere aufgrund von Fertigungstoleranzen an den Deckeln und den Öffnungen. Aufgrund der Fertigungstoleranzen ist es möglich, dass die Deckel mit zu geringer oder zu starker Spannung verrasten. Bei zu geringer Spannung der Schnappung sitzen die Deckel locker in der Öffnung, wackeln und können sogar verloren gehen. Eine zu hohe Spannung erfordert einen größeren Kraftaufwand, eventuell mit Werkzeug zur Montage und Demontage, zur Bedienung der Deckel. Die Schnapphaken können dann übermäßig plastisch verformt werden und durch Relaxation ihre Spannung verlieren und damit ihre Funktion. Folglich sitzen die Deckel wieder locker in der Öffnung, wackeln und können verloren gehen.

Nachteilhaft an den bekannten Deckeln ist außerdem, dass während der Fahrt des Kraftfahrzeugs auftretende dynamische Anregungen, insbesondere Vibrationen, Stöße, etc., zu einem Hin- und Herrücken der Deckel führen können. Dadurch können Geräusche und Abrieb an den Kontaktstellen und an der Lackierung entstehen und im Extremfall kann die Abnutzung wiederum sogar zum Verlust der Deckel führen.

Eine Aufgabe der Erfindung ist es, einen verbesserten und/oder alternativen Deckel zu schaffen.

Diese Aufgabe kann insbesondere mit den Merkmalen des Hauptanspruchs gelöst werden. Vorteilhafte Weiterbildungen sind den abhängigen Ansprüchen zu entnehmen.

Erfindungsgemäß wird ein Kraftfahrzeugelement mit Deckel für zumindest eine Öffnung des Kraftfahrzeugelements (z.B. ein Außenhaut- bzw. Karosserieelement eines Kraftfahrzeugs) geschaffen. Der Deckel weist einen Grundkörper und zumindest eine Befestigungseinrichtung zum Befestigen des Deckels an zumindest einem Öffnungsrand auf. Der Deckel umfasst ferner insbesondere zumindest eine Befestigungseinrichtung mit einer Zentrierfläche, die dazu dient, den Deckel selbstzentrierend zu befestigen, und zumindest eine Beaufschlagungseinrichtung, die dazu dient, die Befestigungseinrichtung gegen einen Abschnitt des Öffnungsrands zu beaufschlagen und um zweckmäßig für einen quasi ständigen Kontakt der Befestigungseinrichtung mit dem Abschnitt des Öffnungsrands zu sorgen. Der Deckel ist vorzugsweise ein verrastbarer Deckel.

Der Deckel ermöglicht insbesondere einen spielfreien und vorspannungsbehafteten und insbesondere sicheren Sitz in der Öffnung. Dadurch wiederum kann zweckmäßig eine Geräuschentwicklung und/oder ein ungewolltes Bewegen des Deckels vermieden oder zumindest reduziert werden, z.B. aufgrund von Vibrationen oder Stößen etwa während der Fahrt des Kraftfahrzeugs. Außerdem weist der Deckel vorteilhaft eine einfache Konstruktion auf und/oder ist einfach zu montieren und zu demontieren.

Es ist möglich, dass die Befestigungseinrichtung zumindest abschnittsweise keil- und/oder prismaförmig ausgeführt ist. Dadurch kann zusätzlich zu der Selbstzentrierungsfunktion z.B. ermöglicht werden, dass der Deckel an Kraftfahrzeugelemente unterschiedlicher Stärke befestigt werden kann.

Die Zentrierfläche umfasst vorzugsweise eine abgerundete und/oder geneigte Eckregion. Die abgerundete Eckregion ist insbesondere ausgeführt, um an einem abgerundeten Eckabschnitt des Öffnungsrands befestigt zu werden. Vorzugsweise entspricht die Krümmung der Eckregion zumindest im Wesentlichen der Krümmung des Eckabschnitts. Bei einer besonders bevorzugten Ausführungsform ist die Befestigungseinrichtung in Form eines geneigten Prismas ausgeführt, dessen äußere geneigte Zentrierfläche gekrümmt ausgebildet ist.

Die Zentrierfläche umfasst vorzugsweise eine abgerundete und/oder geneigte Eckregion. Die abgerundete Eckregion ist insbesondere ausgeführt, um an einem abgerundeten Eckabschnitt des Öffnungsrands befestigt zu werden. Vorzugsweise entspricht die Krümmung der Eckregion zumindest im Wesentlichen der Krümmung des Eckabschnitts. Bei einer besonders bevorzugten Ausführungsform ist die Befestigungseinrichtung in Form eines geneigten Prismas ausgeführt, dessen äußere geneigte Zentrierfläche gekrümmt ausgebildet ist.

Es ist möglich, dass die Beaufschlagungseinrichtung ausgeführt ist, um gegen einen quasi ersten Abschnitt des Öffnungsrands zu drücken, wodurch die Befestigungseinrichtung zweckmäßig quasi gegen einen zweiten Abschnitt des Öffnungsrands beaufschlagt wird.

Die Befestigungseinrichtung und die Beaufschlagungseinrichtung sind vorzugsweise an gegenüberliegenden Seiten des Deckels ausgebildet.

Es ist möglich, dass die Beaufschlagungseinrichtung ausgeführt ist, um gegen einen quasi ersten Abschnitt des Öffnungsrands zu drücken, wodurch die Befestigungseinrichtung zweckmäßig quasi gegen einen zweiten Abschnitt des Öffnungsrands beaufschlagt wird.

Die Befestigungseinrichtung und die Beaufschlagungseinrichtung sind vorzugsweise an gegenüberliegenden Seiten des Deckels ausgebildet.

Es ist möglich, dass die Befestigungseinrichtung und/oder die Beaufschlagungseinrichtung von der Unterseite des Grundkörpers absteht.

Es ist möglich, dass der Raum zwischen der Unterseite des Grundkörpers und der Zentrierfläche zur Aufnahme eines Abschnitts des Öffnungsrands ausgeführt ist.

Der Deckel ist vorzugsweise ausgeführt, um seitlich in die Öffnung hineingeschoben und/oder hineingeschwenkt zu werden, z.B. im Gegensatz zu eindrehbaren Deckeln, wie z.B. übliche Tankdeckel.

Es ist möglich, dass der Grundkörper, insbesondere der Deckel per se, im Wesentlichen plattenförmig ausgebildet ist.

Die Beaufschlagungseinrichtung umfasst ein elastisches Element, insbesondere ein Federelement, oder ist quasi als elastisches Element ausgeführt. Im Rahmen der Erfindung sind dadurch insbesondere jedwede Teile umfasst, die unter Belastung nachgeben und nach Entlastung zumindest im Wesentlichen in ihre ursprüngliche Gestalt zurückkehren und/oder jedwede Teile, die sich elastisch verhalten.

Es ist möglich, dass die Befestigungseinrichtung und/oder die Beaufschlagungseinrichtung eine vorzugsweise quasi automatische Verklemmung ermöglicht, vorzugsweise in zumindest zwei, insbesondere drei Raumrichtungen. Der Deckel ist somit vorzugsweise ein automatisch und/oder federbeaufschlagt verklemmbarer Deckel.

Die Befestigungseinrichtung und/oder die Beaufschlagungseinrichtung ermöglichen eine vorzugsweise quasi automatische Selbstzentrierung des Deckels in drei Raumrichtungen.

Es ist ferner möglich, dass die Befestigungseinrichtung und/oder die Beaufschlagungseinrichtung einen vorspannungsbehafteten Sitz des Deckels in der Öffnung ermöglicht.

Der Deckel ist vorzugsweise so ausgeführt, dass er werkzeugfrei montiert und/oder demontiert werden kann, insbesondere ohne die Notwendigkeit eines Werkzeugs, wie z.B. eines

Schraubenziehers. Zu diesem Zweck kann an der Außenseite des Grundkörpers des Deckels ein Hand-Betätigungselement ausgeführt sein.

Der Deckel umfasst vorzugsweise zumindest zwei Befestigungseinrichtungen und/oder zumindest zwei Beaufschlagungseinrichtungen.

Die Erfindung umfasst außerdem ein Kraftfahrzeugelement, insbesondere ein Karosserie- oder Außenhautelement für ein Nutzfahrzeug, wie z.B. einen Lastkraftwagen oder einen Omnibus, mit einem wie hierin beschriebenen Deckel.

Das Kraftfahrzeugelement umfasst zweckmäßig die genannte Öffnung. Die Öffnung umfasst vorzugsweise zumindest zwei durch ein Brückenelement voneinander getrennte Öffnungsabschnitte.

Es ist möglich, dass jeweils zumindest eine Befestigungseinrichtung zum Einsatz in jeweils einen Öffnungsabschnitt vorgesehen ist. Alternativ oder ergänzend ist es möglich, dass jeweils zumindest eine Beaufschlagungseinrichtung zum Einsatz in jeweils einen Öffnungsabschnitt vorgesehen ist.

Die Erfindung umfasst außerdem ein Kraftfahrzeug, insbesondere ein Nutzfahrzeug, wie z.B. einen Lastkraftwagen oder einen Omnibus, mit einem wie hierin beschriebenen Kraftfahrzeugelement und/oder einem wie hierin beschriebenen Deckel.

Die vorstehend beschriebenen Merkmale und bevorzugten Ausführungsformen der Erfindung sind beliebig miteinander kombinierbar. Andere vorteilhafte Weiterbildungen der Erfindung sind in den abhängigen Ansprüchen offenbart oder ergeben sich aus der nachstehenden Beschreibung bevorzugter Ausführungsformen der Erfindung in Verbindung mit den beigefügten Figuren.
- Figur 1: zeigt eine schematische Seitenschnittansicht eines Deckels gemäß einer Ausführungsform der Erfindung,
- Figur 2: zeigt eine schematische Unteransicht des Deckels der Figur 1,
- Figur 3: illustriert den Demontagevorgang des Deckels der Figuren 1 und 2,
- Figur 4: zeigt eine perspektivische Rückansicht eines Kraftfahrzeugelements mit einem Deckel gemäß einer Ausführungsform der Erfindung,
- Figur 5: zeigt eine perspektivische Vorderansicht des Kraftfahrzeugelements und des Deckels der Figur 4, und
- Figur 6: zeigt eine perspektivische Vorderansicht des Kraftfahrzeugelements der Figuren 4 und 5, jedoch ohne Deckel.

Die unter Bezugnahme auf die Figuren beschriebenen Ausführungsformen der Erfindung stimmen teilweise überein, wobei ähnliche oder identische Teile mit dem gleichen Bezugszeichen versehen sind, und zu deren Erläuterung auch auf die Beschreibung anderer Ausführungsformen oder Figuren verwiesen wird, um Wiederholungen zu vermeiden.

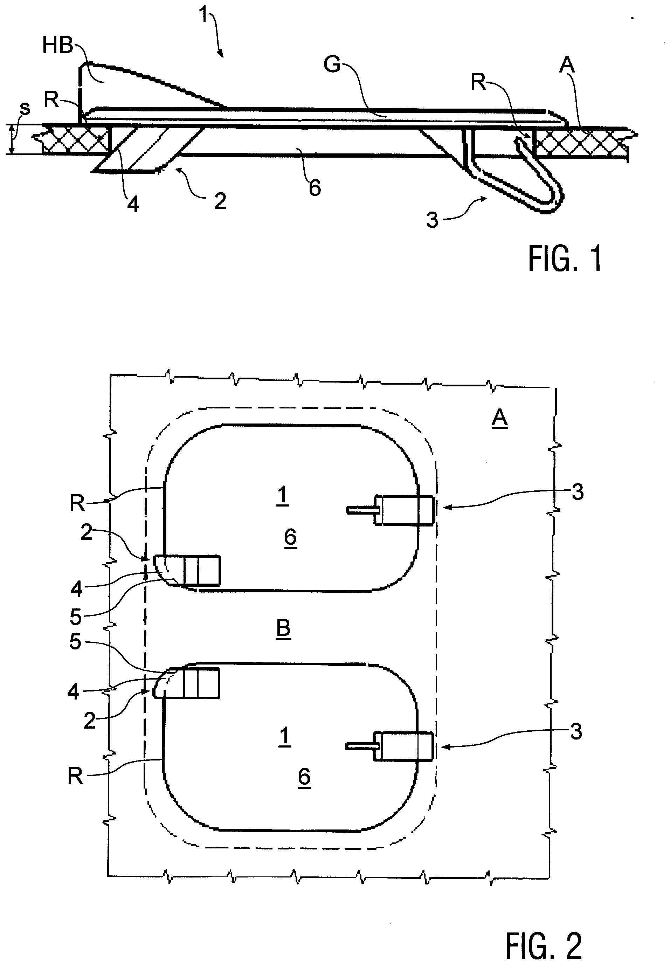

Figur 1 zeigt eine schematische Seitenschnittansicht eines Deckels 1 gemäß einer Ausführungsform der Erfindung. Der zweckmäßig verrastbare Deckel 1 ist in eine Öffnung 6 eines nur teilweise dargestellten Kraftfahrzeugelements A eingesetzt. Die Öffnung 6 ist zweigeteilt ausgeführt und umfasst somit folglich einen zweigeteilten Öffnungsrand R, was sich insbesondere aus Figur 2 ergibt.

Der Deckel 1 umfasst einen im Wesentlichen plattenförmigen Grundkörper G, zwei Befestigungseinrichtungen 2, die vorzugsweise spiegelsymmetrisch angeordnet sind, und zwei Beaufschlagungseinrichtungen 3, die vorzugsweise ebenfalls spiegelsymmetrisch angeordnet sind. Außerdem ist der Deckel 1 mit einem Hand-Betätigungselement HB versehen, das zum Montieren und Demontieren des Deckels 1 genutzt werden kann.

Die Befestigungseinrichtungen 2 sind keil- bzw. prismaförmig ausgeführt und umfassen eine geneigte Zentrierfläche 4, die ausgeführt ist, um den Deckel 1 selbstzentrierend zu befestigen. Die Beaufschlagungseinrichtungen 3 sind als Federelemente vorgesehen und ausgeführt, um gegen einen ersten Abschnitt des Öffnungsrands R (in Figur 1 der rechte Abschnitt des Öffnungsrands) zu drücken, wodurch die Befestigungseinrichtungen 2 gegen einen zweiten Abschnitt des Öffnungsrands R (in Figur 1 der linke Abschnitt des Öffnungsrands) beaufschlagt werden.

Die Befestigungseinrichtungen 2 und die Beaufschlagungseinrichtungen 3 stehen von der Unterseite des Grundkörpers G ab. Ferner sind die Befestigungseinrichtungen 2 und die Beaufschlagungseinrichtungen 3 an gegenüberliegenden Seiten des Grundkörpers G oder allgemein des Deckels 1 ausgebildet.

Wie aus Figur 1 ersichtlich wird, wird zwischen der Unterseite des Grundkörpers G und der Zentrierfläche 4 der Befestigungseinrichtungen 2 ein Raum definiert, der zur Aufnahme eines Abschnitts des Öffnungsrands R ausgeführt ist. Die geneigte Zentrierfläche 4 ermöglicht zusätzlich zu der Selbstzentrierungsfunktion, dass der Deckel 1 an Kraftfahrzeugelementen A unterschiedlicher Stärke s verwendet werden kann.

Figur 2 zeigt eine schematische Unteransicht des Deckels 1 der Figur 1.

Aus Figur 2 wird insbesondere ersichtlich, dass die Zentrierfläche 4 der Befestigungseinrichtungen 2 eine abgerundete Eckregion umfasst. Die abgerundeten Eckregionen sind an abgerundeten Eckabschnitten 5 des Öffnungsrands R befestigt und an die Eckabschnitte 5 so angepasst, dass deren Krümmung im Wesentlichen der Krümmung der Eckabschnitte 5 entspricht.

Die Befestigungseinrichtungen 2 weisen somit die Form geneigter Prismen bzw. Keile auf, deren äußeren geneigten Zentrierflächen 4 sich auf die abgerundeten Eckabschnitte 5 stützen und deren Krümmung wiederholen.

In Figur 2 ist außerdem zu sehen, dass die Öffnung 6 und folglich der Öffnungsrand R zweigeteilt ist, was durch ein Brückenelement B realisiert wird.

Unter Bezugnahme auf die Figuren 1 und 2 wird deutlich, dass die Befestigungseinrichtungen 2 bzw. die Beaufschlagungseinrichtungen 3 ein quasi automatisches, räumliches, d.h. in den drei Raumrichtungen wirkendes Verklemmen und Selbstzentrieren des Deckels 1, einen vorspannungsbehafteten Sitz des Deckels 1 und einen zumindest im Wesentlichen spielfreien Sitz des Deckels 1 ermöglichen, was z.B. ein ungewolltes Bewegen des Deckels 1 etwa während der Fahrt eines Kraftfahrzeugs zumindest reduziert und allgemein einen sicheren Sitz gewährleistet.

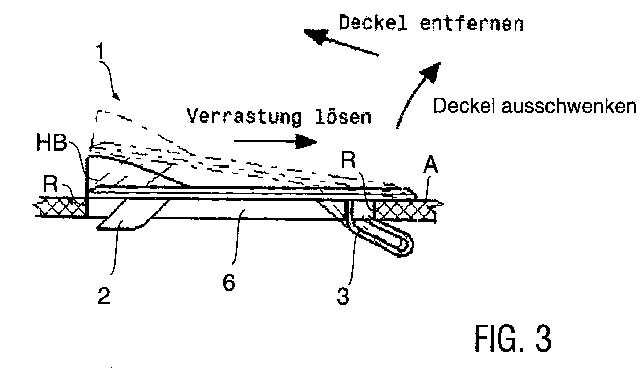

Figur 3 illustriert den Demontagevorgang des Deckels 1 der Figuren 1 und 2 aus der Öffnung 6.

Um die Verklemmung des Deckels 1 zu lösen, wird der Deckel 1 zunächst seitlich, in Figur 3 nach rechts, gegen die Federkraft der Beaufschlagungseinrichtungen 3 bewegt. Daraufhin kann der Deckel 1 ausgeschwenkt und dann gänzlich von der Öffnung 6 entfernt werden. Der Deckel 1 ist somit werkzeugfrei demontierbar, insbesondere mittels des Hand-Betätigungselements HB.

Um den Deckel 1 zu montieren, wird der Deckel 1, in Figur 3 nach links, in die Öffnung 6 seitlich eingeschoben, eingeschwenkt und dann losgelassen, woraufhin der Deckel 1 sich mittels der Befestigungseinrichtungen 2 bzw. der Beaufschlagungseinrichtungen 3 selbst zentriert und verklemmt, was mit einem vorspannungsbehafteten und quasi spielfreien Sitz des Deckels 1 einhergeht. Der Deckel 1 ist somit werkzeugfrei montierbar. insbesondere mittels des Hand-Betätigungselements HB.

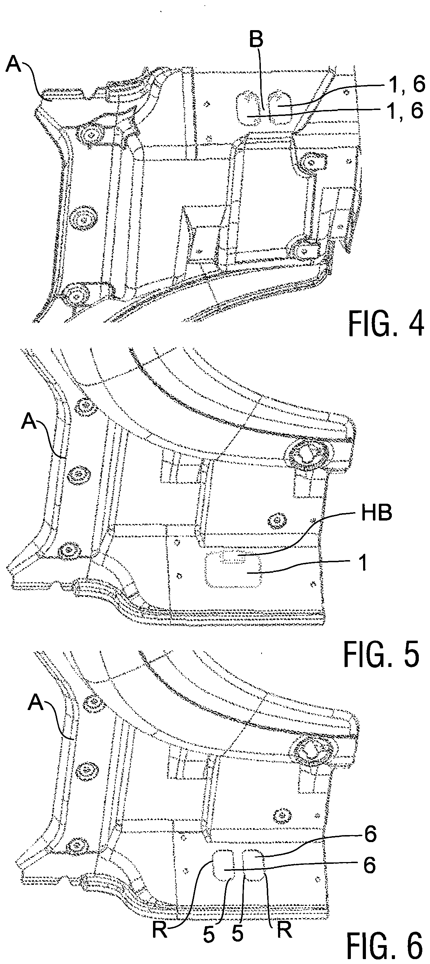

Figur 4 zeigt eine perspektivische Rückansicht eines Kraftfahrzeugelements A gemäß einer Ausführungsform der Erfindung. Das Kraftfahrzeugelement A ist als Einstiegskotflügel für ein Nutzfahrzeug ausgeführt. Das Kraftfahrzeugelement A, insbesondere dessen Öffnung 6, kann gemäß den Figuren 1 bis 3 ausgeführt sein. Der Deckel 1 kann ebenso gemäß den Figuren 1 bis 3 ausgeführt sein.

Figur 5 zeigt eine Vorderansicht des Kraftfahrzeugelements A der Figur 4 und des Deckels 1, der die Öffnung 6 schließt.

Figur 6 zeigt eine perspektivische Vorderansicht des Kraftfahrzeugelements A der Figuren 4 und 5 und insbesondere der Öffnung 6, jedoch ohne Deckel 1.

Die Erfindung ist nicht auf die vorstehenden beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

## Patentansprüche

1. Kraftfahrzeugelement (A), mit einem Deckel (1) für zumindest eine Öffnung (6) des Kraftfahrzeugelements (A), mit einem Grundkörper (G) und zumindest einer Befestigungseinrichtung (2) zum Befestigen des Deckels (1) an zumindest einem Öffnungsrand (R), wobei
- zumindest eine Befestigungseinrichtung (2) eine Zentrierfläche (4) umfasst, die ausgeführt ist, um den Deckel (1) selbstzentrierend zu befestigen, wobei
- der Deckel (1) zumindest eine Beaufschlagungseinrichtung (3) umfasst, die ausgeführt ist, um die Befestigungseinrichtung (2) gegen einen Abschnitt des Öffnungsrands (R) zu beaufschlagen, so dass ein spielfreier und vorspannungsbehafteter Sitz des Deckels (1) in der Öffnung (6) ermöglicht wird, **dadurch gekennzeichnet, dass**
- die Befestigungseinrichtung (2) und/oder die Beaufschlagungseinrichtung (3) eine Selbstzentrierung des Deckels (1) in drei Raumrichtungen ermöglicht.

2. Kraftfahrzeugelement (A) nach Anspruch 1, **dadurch gekennzeichnet, dass** die Befestigungseinrichtung (2) zumindest abschnittsweise keil- und/oder prismaförmig ausgeführt ist.

3. Kraftfahrzeugelement (A) nach Anspruch 1 oder 2, **dadurch gekennzeichnet, dass** die Zentrierfläche (4) eine abgerundete, vorzugsweise geneigte, Eckregion aufweist.

4. Kraftfahrzeugelement (A) nach Anspruch 3, **dadurch gekennzeichnet, dass** die abgerundete Eckregion ausgeführt ist, um an einem abgerundeten Eckabschnitt (5) des Öffnungsrands (R) befestigt zu werden und die Krümmung der abgerundeten Eckregion der Krümmung des Eckabschnitts (5) zumindest im Wesentlichen entspricht.

5. Kraftfahrzeugelement (A) nach einem der vorhergehenden Ansprüche, **dadurch gekennzeichnet, dass** die Beaufschlagungseinrichtung (3) ausgeführt ist, um gegen einen Abschnitts des Öffnungsrands (R) zu drücken.

6. Kraftfahrzeugelement (A) nach einem der vorhergehenden Ansprüche, **dadurch gekennzeichnet, dass** die Befestigungseinrichtung (2) und die Beaufschlagungseinrichtung (3) an gegenüberliegenden Seiten des Deckels (1) ausgebildet sind.

7. Kraftfahrzeugelement (A) nach einem der vorhergehenden Ansprüche, **dadurch gekennzeichnet, dass** die Befestigungseinrichtung (2) und/oder die Beaufschlagungseinrichtung (3) von der Unterseite des Grundkörpers (G) absteht.

8. Kraftfahrzeugelement (A) nach einem der vorhergehenden Ansprüche, **dadurch gekennzeichnet, dass** der Raum zwischen der Unterseite des Grundkörpers (G) und der Zentrierfläche (4) zur Aufnahme eines Abschnitts des Öffnungsrands (R) ausgeführt ist.

9. Kraftfahrzeugelement (A) nach einem der vorhergehenden Ansprüche, **dadurch gekennzeichnet, dass** der Deckel (1) ausgeführt ist, um zur Montage in die Öffnung (6) seitlich hineingeschoben und/oder hineingeschwenkt zu werden.

10. Kraftfahrzeugelement (A) nach einem der vorhergehenden Ansprüche, **dadurch gekennzeichnet, dass** der Grundkörper (G) im Wesentlichen plattenförmig ausgebildet ist.

11. Kraftfahrzeugelement (A) nach einem der vorhergehenden Ansprüche, **dadurch gekennzeichnet, dass** die Beaufschlagungseinrichtung (3) ein elastisches Element, insbesondere Federelement, ist oder umfasst.

12. Kraftfahrzeugelement (A) nach einem der vorhergehenden Ansprüche, **dadurch gekennzeichnet, dass** die Befestigungseinrichtung (2) und die Beaufschlagungseinrichtung (3) zumindest eines von folgenden ermöglichen:
- eine automatische Selbstzentrierung des Deckels (1),
- eine vorzugsweise automatische Verklemmung des Deckels (1).

13. Kraftfahrzeugelement (A) nach einem der vorhergehenden Ansprüche, **dadurch gekennzeichnet, dass** der Deckel (1) werkzeugfrei montierbar und/oder demontierbar ist.

14. Kraftfahrzeugelement (A) nach einem der vorhergehenden Ansprüche, **dadurch gekennzeichnet, dass** der Deckel (1) zumindest zwei Befestigungseinrichtungen (2) und/oder zumindest zwei Beaufschlagungseinrichtungen (3) umfasst.

15. Kraftfahrzeugelement (A) nach einem der vorhergehenden Ansprüche, **dadurch gekennzeichnet, dass** das Kraftfahrzeugelement (A) ein Karosserie- oder Außenhautelement für ein Nutzfahrzeug umfasst.

16. Kraftfahrzeugelement (A) nach einem der vorhergehenden Ansprüche, **dadurch gekennzeichnet, dass** die Öffnung (6) zumindest zwei Öffnungsabschnitte umfasst, die durch ein Brückenelement (B) voneinander getrennt sind.

17. Kraftfahrzeugelement (A) nach einem der vorhergehenden Ansprüche, **dadurch gekennzeichnet, dass** jeweils zumindest eine Befestigungseinrichtung (2) und/oder jeweils zumindest eine Beaufschlagungseinrichtung (3) für jeweils einen Öffnungsabschnitt vorgesehen ist.

18. Kraftfahrzeug, insbesondere Nutzfahrzeug, mit einem Kraftfahrzeugelement (A) nach einem der vorhergehenden Ansprüche.

## Claims

1. A motor vehicle element (A), having a cover (1) for at least one opening (6) of the motor vehicle element (A), having a main body (G) and having at least one fastening device (2) for fastening the cover (1) to at least one opening edge (R), wherein
- at least one fastening device (2) comprises a centring surface (4) which is embodied to fasten the cover (1) in a self-centring manner, wherein
- the cover (1) comprises at least one loading device (3) which is embodied to load the fastening device (2) against a portion of the opening edge (R), with the result that a play-free and preloaded fit of the cover (1) in the opening (6) is made possible, **characterized in that**
- the fastening device (2) and/or the loading device (3) make/makes it possible for the cover (1) to centre itself in three directions in space.

2. The motor vehicle element (A) according to Claim 1, **characterized in that** the fastening device (2) is of wedge-shaped and/or prism-shaped embodiment at least in certain portions.

3. The motor vehicle element (A) according to Claim 1 or 2, **characterized in that** the centring surface (4) has a rounded, preferably inclined, corner region.

4. The motor vehicle element (A) according to Claim 3, **characterized in that** the rounded corner region is embodied to be fastened to a rounded corner portion (5) of the opening edge (R), and the curvature of the rounded corner region corresponds at least substantially to the curvature of the corner portion (5).

5. The motor vehicle element (A) according to one of the preceding claims, **characterized in that** the loading device (3) is embodied to press against a portion of the opening edge (R).

6. The motor vehicle element (A) according to one of the preceding claims, **characterized in that** the fastening device (2) and the loading device (3) are configured on opposite sides of the cover (1).

7. The motor vehicle element (A) according to one of the preceding claims, **characterized in that** the fastening device (2) and/or the loading device (3) project/projects from the underside of the main body (G).

8. The motor vehicle element (A) according to one of the preceding claims, **characterized in that** the space between the underside of the main body (G) and the centring surface (4) is embodied to receive a portion of the opening edge (R).

9. The motor vehicle element (A) according to one of the preceding claims, **characterized in that**, for installation purposes, the cover (1) is embodied to be laterally slid and/or pivoted into the opening (6).

10. The motor vehicle element (A) according to one of the preceding claims, **characterized in that** the main body (G) is of substantially plate-like configuration.

11. The motor vehicle element (A) according to one of the preceding claims, **characterized in that** the loading device (3) is or comprises an elastic element, in particular a spring element.

12. The motor vehicle element (A) according to one of the preceding claims, **characterized in that** the fastening device (2) and the loading device (3) make at least one of the following possible:
- automatic self-centring of the cover (1),
- preferably automatic clamping of the cover (1).

13. The motor vehicle element (A) according to one of the preceding claims, **characterized in that** the cover (1) can be installed and/or removed without the use of tools.

14. The motor vehicle element (A) according to one of the preceding claims, **characterized in that** the cover (1) comprises at least two fastening devices (2) and/or at least two loading devices (3).

15. The motor vehicle element (A) according to one of the preceding claims, **characterized in that** the motor vehicle element (A) comprises a bodyshell or outer skin element for a commercial vehicle.

16. The motor vehicle element (A) according to one of the preceding claims, **characterized in that** the opening (6) comprises at least two opening portions which are separated from one another by way of a bridge element (B) .

17. The motor vehicle element (A) according to one of the preceding claims, **characterized in that** in each case at least one fastening device (2) and/or in each case at least one loading device (3) are/is provided for a respective opening portion.

18. A motor vehicle, in particular a commercial vehicle, having a motor vehicle element (A) according to one of the preceding claims.

## Revendications

1. Élément de véhicule automobile (A) comprenant un couvercle (1) pour au moins une ouverture (6) de l'élément de véhicule automobile (A), un corps de base (G) et au moins un dispositif de fixation (2) pour la fixation du couvercle (1) à au moins un bord d'ouverture (R),
- au moins un dispositif de fixation (2) comprenant une surface de centrage (4) qui est réalisée de manière à fixer le couvercle (1) de manière autocentrée,
- le couvercle (1) comprenant au moins un dispositif de sollicitation (3) qui est réalisé de manière à solliciter le dispositif de fixation (2) contre une portion du bord d'ouverture (R) de telle sorte qu'un ajustement sans jeu et soumis à précontrainte du couvercle (1) dans l'ouverture (6) soit possible,
**caractérisé en ce que**
- le dispositif de fixation (2) et/ou le dispositif de sollicitation (3) permet(tent) un autocentrage du couvercle (1) dans trois directions spatiales.

2. Élément de véhicule automobile (A) selon la revendication 1, **caractérisé en ce que** le dispositif de fixation (2) est réalisé au moins en partie en forme de coin et/ou de prisme.

3. Élément de véhicule automobile (A) selon la revendication 1 ou 2, **caractérisé en ce que** la surface de centrage (4) présente une région de coin arrondie, de préférence inclinée.

4. Élément de véhicule automobile (A) selon la revendication 3, **caractérisé en ce que** la région de coin arrondie est réalisée de manière à être fixée à une portion de coin arrondie (5) du bord d'ouverture (R) et la courbure de la région de coin arrondie correspond au moins essentiellement à la courbure de la portion de coin (5).

5. Élément de véhicule automobile (A) selon l'une quelconque des revendications précédentes, **caractérisé en ce que** le dispositif de sollicitation (3) est réalisé de manière à presser contre une portion du bord d'ouverture (R).

6. Élément de véhicule automobile (A) selon l'une quelconque des revendications précédentes, **caractérisé en ce que** le dispositif de fixation (2) et le dispositif de sollicitation (3) sont réalisés sur des côtés opposés du couvercle (1).

7. Élément de véhicule automobile (A) selon l'une quelconque des revendications précédentes, **caractérisé en ce que** le dispositif de fixation (2) et/ou le dispositif de sollicitation (3) fait(font) saillie depuis le côté inférieur du corps de base (G).

8. Élément de véhicule automobile (A) selon l'une quelconque des revendications précédentes, **caractérisé en ce que** l'espace entre le côté inférieur du corps de base (G) et la surface de centrage (4) est prévu pour recevoir une portion du bord d'ouverture (R).

9. Élément de véhicule automobile (A) selon l'une quelconque des revendications précédentes, **caractérisé en ce que** le couvercle (1) est prévu pour être enfoncé latéralement et/ou pivoté dans l'ouverture (6) pour le montage.

10. Élément de véhicule automobile (A) selon l'une quelconque des revendications précédentes, **caractérisé en ce que** le corps de base (G) est réalisé essentiellement en forme de plaque.

11. Élément de véhicule automobile (A) selon l'une quelconque des revendications précédentes, **caractérisé en ce que** le dispositif de sollicitation (3) est ou comprend un élément élastique, en particulier un élément de ressort.

12. Élément de véhicule automobile (A) selon l'une quelconque des revendications précédentes, **caractérisé en ce que** le dispositif de fixation (2) et le dispositif de sollicitation (3) permettent au moins l'une des actions suivantes :
- un autocentrage automatique du couvercle (1),
- un serrage de préférence automatique du couvercle (1).

13. Élément de véhicule automobile (A) selon l'une quelconque des revendications précédentes, **caractérisé en ce que** le couvercle (1) peut être monté et/ou démonté sans outil.

14. Élément de véhicule automobile (A) selon l'une quelconque des revendications précédentes, **caractérisé en ce que** le couvercle (1) comprend aux moins deux dispositifs de fixation (2) et/ou aux moins deux dispositifs de sollicitation (3).

15. Élément de véhicule automobile (A) selon l'une quelconque des revendications précédentes, **caractérisé en ce que** l'élément de véhicule automobile (A) comprend un élément de carrosserie ou de panneau extérieur pour un véhicule utilitaire.

16. Élément de véhicule automobile (A) selon l'une quelconque des revendications précédentes, **caractérisé en ce que** l'ouverture (6) comprend au moins deux portions d'ouverture qui sont séparées l'une de l'autre par un élément de pont (B).

17. Élément de véhicule automobile (A) selon l'une quelconque des revendications précédentes, **caractérisé en ce qu'**à chaque fois au moins un dispositif de fixation (2) et/ou à chaque fois au moins un dispositif de sollicitation (3) est/sont prévu(s) pour une portion d'ouverture respective.

18. Véhicule automobile, en particulier véhicule utilitaire comprenant un élément de véhicule automobile (A) selon l'une quelconque des revendications précédentes.
